# FASCICULE DE BREVET EUROPEEN

(11) **EP 1 516 777 B1**
(45) Date de publication et mention de la délivrance du brevet: **11.03.2009**
(21) Numéro de dépôt: 04292227.8
(22) Date de dépôt: 16.09.2004
(51) Int. Cl.: B60N 3/14

(54) **Dispositif d'éclairage pour allume-cigare ou prise électrique multi-fonction**
Beleuchtungsvorrichtung für elektrischen Zigarrenanzünder oder multi-funktionelle elektrische Steckdose
Illuminating device for electric cigar lighter or multi-functional electrical socket.

(30) Priorité: 19.09.2003 FR 0311056
(43) Date de publication de la demande: 23.03.2005
(73) Titulaire: VALEO VISION, 93012 Bobigny Cedex (FR)
(72) Inventeur: Andrieu, Michel, 81660 Pont de L'Arn (FR); Can, Jean-Michel, 31250 Revel (FR); Lau, Francis, 81290 Labruguire (FR)
(74) Mandataire: Renous Chan, Véronique

(56) Documents cités:
- EP-A- 0 819 575
- DE-U- 29 724 118
- GB-A- 767 444
- US-A- 4 213 665
- US-A- 4 527 048
- US-A- 4 899 263
- US-A- 5 928 538
- US-A- 5 928 539
- US-A- 5 998 763

## Description

La présente invention concerne les allume-cigares électriques, ou les prises électriques multifonction, notamment destinés à équiper des véhicules automobiles. Elle se rapporte plus particulièrement aux moyens pour éclairer les allume-cigares, se présentant notamment sous forme de bagues éclairantes associées à un module éclairant.

De manière connue, les allume-cigares sont éclairés par une lampe montée dans un module d'éclairage. L'alimentation électrique de cette lampe est réalisée par l'intermédiaire de lames de matériau conducteur. Ces lames sont d'une part en contact électrique avec le corps de l'allume-cigare faisant masse. Elles sont d'autre part soit en contact avec une languette du connecteur, soit directement connectées au câble d'alimentation électrique. Un exemple de module d'éclairage porté par une bague éclairante d'un allume-cigare est décrit dans le brevet FR 2 758 111 qui montre les caractéristiques du préambule de la revendication 1.

On cherche à améliorer la fiabilité et la longévité des lampes. C'est la raison pour laquelle il a été proposé dans la demande de brevet EP 819 575 de remplacer la lampe conventionnelle par une diode électroluminescente, généralement désignée sous le terme anglais de LED. Les diodes ont en effet généralement une durée de vie plus longue que les lampes conventionnelles, et une consommation électrique moindre. Cependant, la disposition de la diode dans l'allume-cigare selon ce document ne donne pas entièrement satisfaction : elle ne permet pas d'éclairer le cendrier, et on peut craindre des fuites de lumière par réflexion sur le corps métallique de l'allume-cigare. Elle ne paraît pas non plus permettre beaucoup de souplesse dans son mode d'alimentation électrique. Elle nécessite également de revoir complètement la conception de la bague éclairante qui lui est associée, et son montage n'est pas très compact. Elle oblige aussi à utiliser un mode de soudure manuel des fils de connexion avec les contacts de frottement et de placer la diode, ainsi que la résistance et les contacts de frottement sur un coulisseau avant de les souder ensemble pour réaliser le circuit électrique.

L'invention a alors pour but d'éviter ces inconvénients, notamment en améliorant la conception des modules d'éclairage pour allume-cigare. L'invention cherche notamment à mettre au point des modules d'éclairage utilisant des diodes électroluminescentes, et qui soient fiables et de longue durée de vie, mais qui soient aussi, par exemple, plus compacts, plus faciles à monter de manière automatisée, ou qui nécessitent le moins de modifications possible dans la conception de l'allume-cigare dans son ensemble et dans celle de la bague de fixation en particulier.

L'invention a tout d'abord pour objet un dispositif d'éclairage pour allume-cigare comportant : une bague éclairante sur laquelle est monté un module éclairant, ledit module éclairant comprenant :
- au moins un circuit imprimé muni d'au moins une diode électroluminescente,
- un capot destiné à loger au moins en partie le circuit imprimé,
- au moins deux languettes d'alimentation électrique dudit circuit imprimé, fixées mécaniquement audit capot.

Au sens de l'invention, on comprend par circuit imprimé le ou les circuits imprimés déposé(s) sur son substrat et muni(s) des composants électroniques appropriés. Ce circuit imprimé peut également être muni d'une ou plusieurs résistances.

Le circuit imprimé peut être muni de plusieurs diodes électroluminescentes. Utiliser des diodes est avantageux, car ce type de source lumineuse est fiable, de longue durée de vie et économe en consommation électrique. Choisir de fixer les diodes et leurs circuits imprimés associés dans une pièce dite capot indépendante de la bague éclairante elle-même est industriellement avantageux. En effet, il devient inutile de modifier la conception des bagues éclairantes existantes, il suffit simplement de monter sur la bague le module éclairant à diode à la place du module conventionnel. On peut prévoir ensuite une gamme de modules éclairants à diodes, identiques structurellement les uns aux autres, mais équipées des diodes émettant les différentes couleurs demandées : on aura ainsi un module à diode rouge, un module à diode bleue ...

Avantageusement, le ou au moins une des diodes est soudée directement sur le circuit imprimé.

A titre d'exemple, cette soudure peut être réalisée de manière automatisée sur une plaque en matière isolante électrique recouverte d'un dépôt de cuivre, dans le quel le circuit électrique liant les composants du circuit est réalisé par enlèvement du cuivre, par des moyens mécaniques ou chimiques. Sur ce circuit peut être implantée, soudée en série avec la diode, une résistance d'une valeur adaptée à la tension d'alimentation de la diode. Cette résistance est ensuite reliée électriquement à la piste de contact constituant la borne + du circuit. Entre chaque borne du circuit, se situent des zones de cuivre non vernies permettant de relier d'une part la borne + de la diode à une languette d'alimentation, d'autre part la borne - de la diode à une autre languette d'alimentation. Le grand avantage de ce type de conception, non limitatif cependant, est que l'on peut industriellement réaliser des circuits imprimés sur leurs circuits avec leurs diodes associées de façon extrêmement automatisée, en pouvant supprimer toute étape de soudure manuelle. Elle autorise en outre le recours à des circuits imprimés à diodes de type CMS, c'est-à-dire non traversants, appelés encore circuits imprimés de surface.

Avantageusement, les languettes sont insérées par coulissement dans des rails pratiqués dans le capot du type feuillures, et sont notamment verrouillées mécaniquement au capot, de préférence par clipsage. Les languettes d'alimentation sont avantageusement positionnées dans le capot par un système de rails et glissières complémentaires.

Ce mode de montage est simple et garantit la fixation correcte de la languette lors du montage de celle-ci, ce qui est un confort pour l'opérateur. En outre, on a ainsi la possibilité d'assembler en automatique le module éclairant, en gardant un seul sens d'assemblage des différents éléments qui le composent.

Avantageusement, le circuit imprimé est positionné dans le capot à l'aide d'un système de rails et de glissières complémentaires. La conception la plus simple consiste à ce que le capot soit muni de glissières, de rainures dans lesquelles on peut insérer le circuit. Le capot ou le circuit peut être muni de rails spécifiques. Plus simplement encore, notamment quand le circuit a approximativement la forme d'un parallélépipède, au moins à sa périphérie, on peut utiliser deux de ses bords opposés pour servir de rails.

De préférence, le circuit imprimé est verrouillé mécaniquement dans le capot, notamment à l'aide d'ergots dépassant de celui-ci et réalisant des butées l'empêchant de sortir du ou des glissières, et de cavités complémentaires présentes dans le capot, du type système de clipsage. Une légère déformation du circuit permet avantageusement à celui-ci de dépasser ces butées lors du montage.

Toujours pour simplifier la conception du produit, on préfère que le contact électrique entre les languettes d'alimentation et le circuit imprimé se fasse par contact direct. On utilise alors avantageusement un effet ressort des languettes, en choisissant une forme appropriée des languettes présentant un certain degré de flexibilité. De préférence, elles ont une zone repliée, de façon à exercer une pression mécanique contre la surface du circuit assurant le contact électrique effectif entre languettes et circuit. La zone repliée peut être en forme de de U allongé (une des branches du U venant s'appuyer sur la surface du circuit), ou toute autre forme plus complexe. Les languettes sont donc choisies de préférence en matière conductrice, et sous forme de lames flexibles présentant sur au moins une portion de leur longueur une zone repliée. Elles peuvent se présenter sous une forme de pince à plusieurs branches, dont une branche va se fixer sur une face du capot par clipsage ou autre moyen de fixation mécanique, et l'autre branche va faire le contact avec le circuit imprimé par pression de type ressort.

De préférence, le capot est monté sur la bague éclairante par un système de clipsage, notamment du type de celui décrit dans le brevet FR 2 758 111. Il peut être verrouillé mécaniquement en position par tout moyen mécanique, notamment par ledit système de clipsage, par un système d'ergots et de cavités complémentaires.

Concrètement, on peut donc prévoir un capot, de préférence sous la forme d'un boîtier en matière plastique, par exemple en thermoplastique injecté, que l'on munit des feuillures appropriées pour intégrer circuit imprimé et languettes d'alimentation.

Selon une variante, une des languettes d'alimentation peut être munie d'une zone réfléchissante au moins, de forme et de propriétés adaptées (par adjonction d'un petit miroir, traitement localisé de la lame métallique...). Cette zone réfléchissante peut être disposée en regard d'une ouverture pratiquée dans le circuit imprimé, et dans une configuration telle par rapport à la diode émettant la lumière que tout ou partie du flux lumineux est redirigé par cette zone au travers de l'ouverture dans une direction prédéterminée. Ce flux ainsi prélevé peut servir, par exemple, à éclairer le cendrier du véhicule, généralement à proximité immédiate de l'allume-cigare, sans avoir recours à une seconde source lumineuse dédiée à cet effet. Bien sûr, la zone réfléchissante peut aussi être dissociée de la languette, et être disposée, par exemple, sur ou dans le capot.

L'invention a également pour objet l'allume-cigare comportant ce dispositif d'éclairage et le véhicule comportant cet allume-cigare.

L'invention sera détaillée ci-après avec des exemples non limitatifs, à l'aide des figures suivantes :
- **fig.1** **:** une vue en perspective éclatée montrant les sous ensembles principaux d'un allume-cigare à bague éclairante
- **fig. 2** **:** une vue en perspective éclatée du dispositif d'éclairage selon l'invention, avant montage
- **fig. 3****:** une représentation en vue de dessous du dispositif d'éclairage selon la figure 2 après montage,
- **fig. 4** **et** **5** **:** deux vues en perspective du capot du dispositif d'éclairage
- **Fig.6 et 7****:** deux vues en perspective des languettes d'alimentation du dispositif d'éclairage

Les figures ne sont données qu'à titre indicatif.

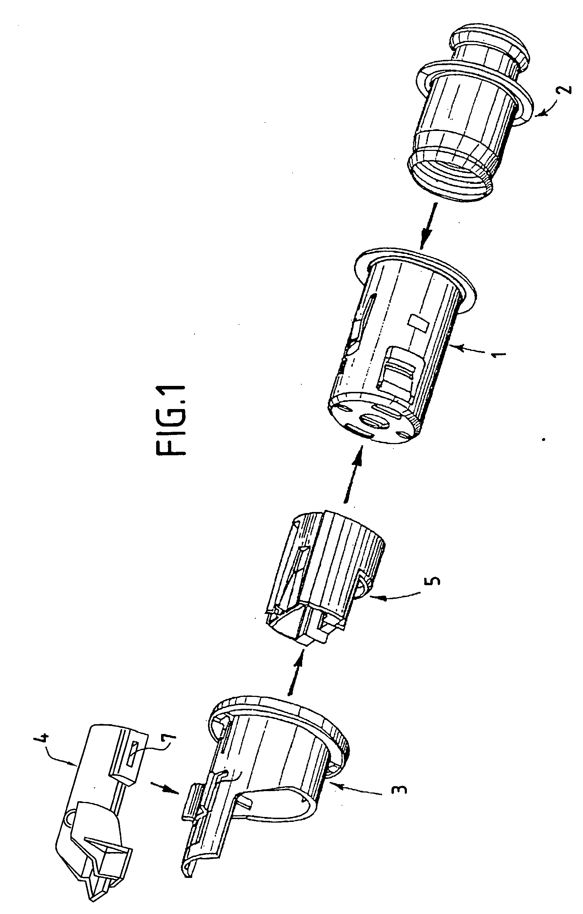

La figure 1 représente donc un allume-cigare avec bague éclairante, tel que décrit plus en détails dans le brevet précité FR2 758 111. Cet allume-cigare comporte un corps d'allumage 1 pour réception et chauffage d'un bouchon chauffant amovible 2. Il comporte aussi une bague éclairante 3 en matériau translucide destinée à entourer le corps d'allumage 1 pour fixation dudit corps sur la paroi fixe du véhicule et repérage la nuit de l'allume-cigares, un module éclairant 4 pour l'éclairage de la bague éclairante 3, un module de connexion 5 pour l'alimentation du corps d'éclairage 1. Le module éclairant 4, de type conventionnel, est monté sur la bague 3 à l'aide d'un système de clipsage entre des cavités présentes en partie supérieure de la bague sur des éléments protubérants 6, cavités qui vont coopérer avec des ergots 7 présents en partie inférieure avant du module éclairant 4', avec un verrouillage mécanique assuré en fin de course lors du montage du module sur la bague.

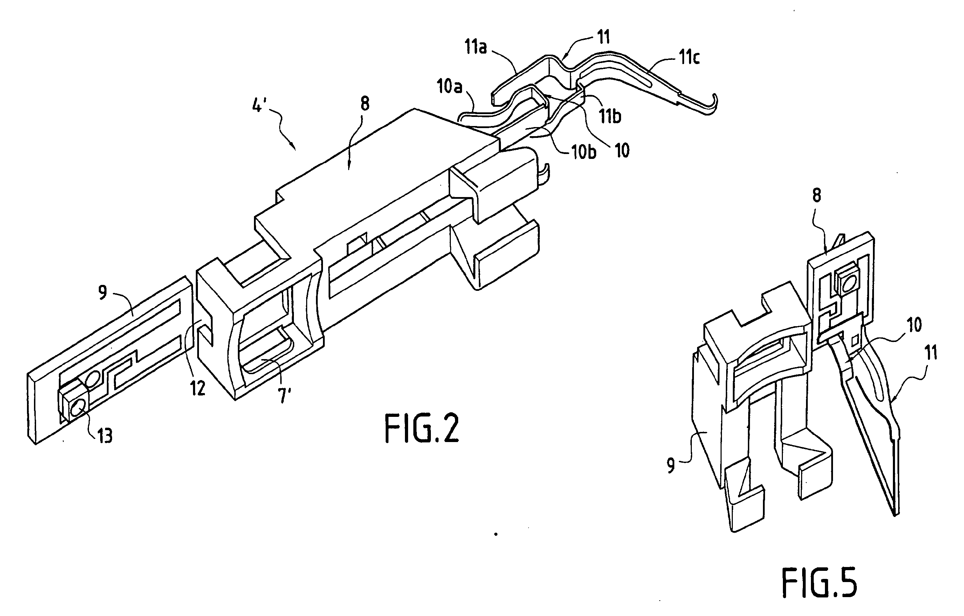

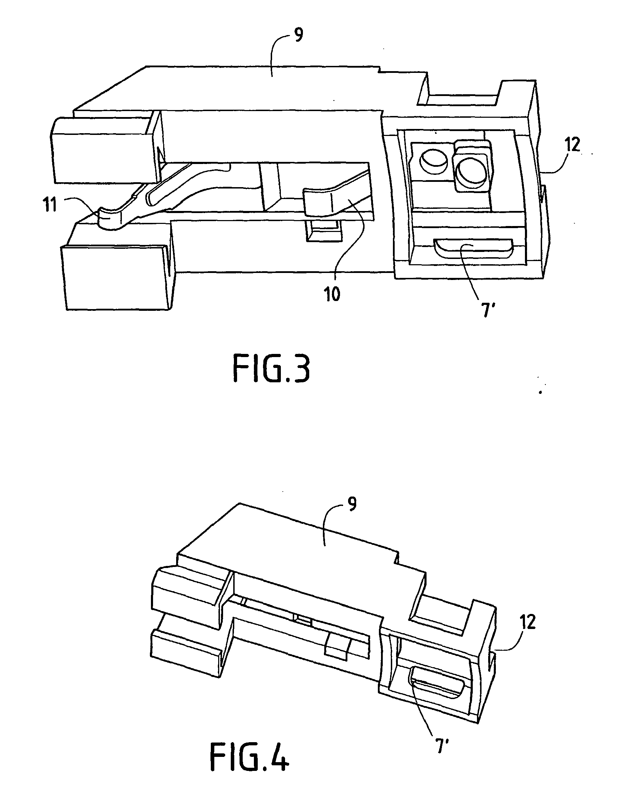

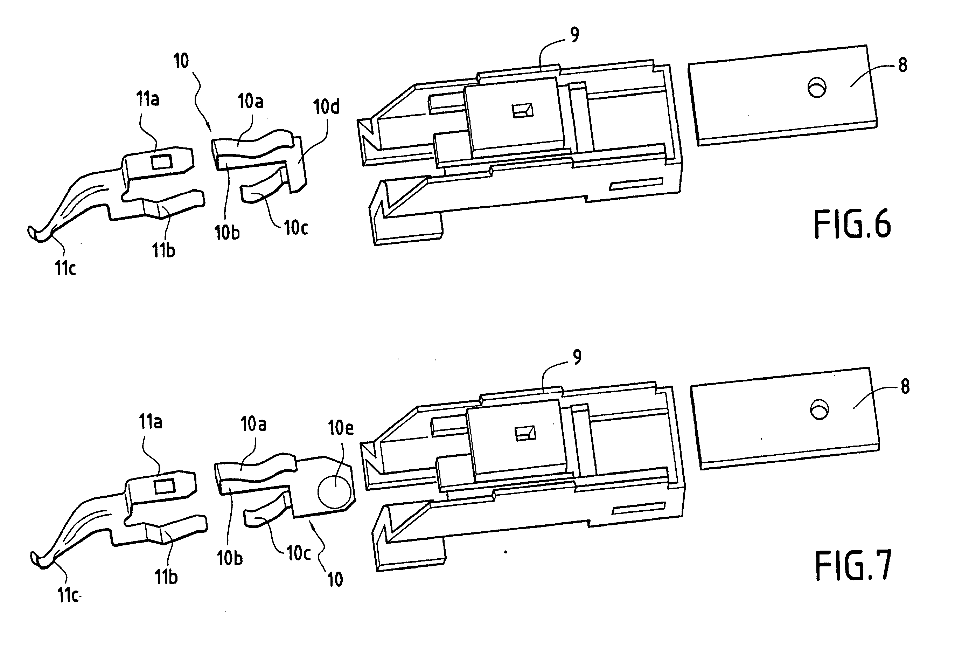

L'invention a mis au point un nouveau type de module éclairant ne nécessitant pas une modification dans la conception des bagues éclairantes : la figure 2 montre le module éclairant 4' selon l'invention, pouvant se fixer sur une bague 3. Ce module comporte le capot 8, présentant des ergots 7' aptes à coopérer avec les cavités 6 de la bague. (On voit plus en détails ces rails ergots 7' aux figures 3 à 5). Le module éclairant 4' comporte aussi un circuit imprimé 9, sur lequel est montée une diode électroluminescente non représentée. Le circuit 9 est monté dans le capot 8 par des rails présents dans le capot, dans lequel a été aménagée une encoche 12 pour laisser passer, notamment, la tête de la diode. Le circuit 8 est fixé dans le capot 9 par encliquetage. Les figures 2,3 et 5 représentent les deux languettes d'alimentation 10, 11 ayant une forme repliée. La languette 10 présente une branche 10a incurvée, une branche 10b sensiblement plane, les deux branches étant reliées l'une à l'autre par une zone intermédiaire courbe, elle présente aussi une branche 10c reliée par une zone intermédiaire 10d diamétralement opposée à la zone intermédiaire précédente, la branche 10c constituant la lame en contact avec le circuit imprimé. La languette 11 est munie d'une branche 11 a munie d'un ergot de fixation au capot, d'une branche 11b qui constitue la lame en contact avec le circuit imprimé, les branches 11 a et 11b se prolongeant par une lame 11c accessible une fois la languette 11 insérée hors dans le capot. Les figures 6 et 7 représentent ces languettes selon deux variantes : en figure 6, la languette 10 est telle que décrite précédemment, en figure 7 la languette 10 a été modifiée afin d'inclure une zone 10e faisant fonction de réflecteur optique, de façon à pouvoir rediriger tout ou partie du flux lumineux de la diode vers le cendrier par exemple.

Les languettes 10 et 11 présentent chacune un ergot sur l'une de leurs branches, qui, lors du montage des languettes par coulissement dans des rails du capot, viennent se clipser dans des ouvertures ménagées dans le capot pour assurer leur verrouillage mécanique. La languette 10 est celle assurant le contact électrique avec la masse, la languette 11 est celle assurant le contact avec une languette du connecteur reliée à la borne + de la source lumineuse. Comme déjà décrit, une autre branche des languettes fait le contact électrique, par effet ressort par contact direct, avec les pistes appropriées du circuit imprimé.

La figure 2 et la figure 7 notamment montrent le circuit de circuit imprimé 9 muni d'une zone 13 où est montée la diode, et, de manière adjacente, une ouverture circulaire. Cette ouverture circulaire coopère avec une zone modifiée 10e de la languette 10, zone traitée pour jouer le rôle d'un miroir. Une partie du flux lumineux de la diode, la moitié notamment, peut ainsi être prélevée et redirigée par le miroir dans une direction opposée à la direction d'émission principale, ce flux redirigé permettant alors d'éclairer le cendrier. Cette variante est optionnelle. On voit aussi à la figure 2 des pistes de connexion électrique sur le circuit 9.

La figure 2 explicite également la façon dont le module éclairant est monté, avec un montage du circuit imprimé dans le capot par coulissement du circuit à l'une des extrémités dudit capot, et montage des deux languettes par insertion de celles-ci par l'extrémité opposée du capot, la languette 11 venant coiffer la languette 10 lors du montage. La figure 3 représente le module éclairant complet.

On a donc un capot adaptable sur toute bague d'éclairage standard, on n'a aucun fils de connexion, et le module éclairant dans son ensemble 4' est particulièrement compact et plat. On peut, de façon automatisée, assembler les composants du circuit imprimé, puis monter le circuit imprimé achevé et ses languettes de connexion dans le capot, d'où une fabrication industrielle facilitée.

L'invention peut être adaptée pour être appliquée aux prises multi-fonction de véhicules.

## Revendications

1. Dispositif d'éclairage pour allume-cigare comportant :
une bague éclairante (3) sur laquelle est monté un module éclairant (4') **caractérisé en ce que** ledit module éclairant (4') comprend
- au moins un circuit imprimé (9) muni d'au moins une diode électroluminescente et éventuellement d'au moins une résistance,
- un capot (8) destiné à loger au moins en partie ledit circuit (9) et son circuit imprimé,
- au moins deux languettes d'alimentation électrique (10, 11) dudit circuit imprimé, fixées mécaniquement audit capot (8).

2. Dispositif selon la revendication 1, **caractérisé en ce que** la ou au moins une des diodes électroluminescentes est soudée directement sur le circuit imprimé.

3. Dispositif selon l'une des revendications précédentes, **caractérisé en ce que** le circuit imprimé est de type non traversant, dit CMS.

4. Dispositif selon l'une des revendications précédentes, **caractérisé en ce que** les languettes d'alimentation (10,11) sont positionnées dans le capot (8) par un système de rails et glissières complémentaires.

5. Dispositif selon l'une des revendications précédentes, **caractérisé en ce que** les languettes d'alimentation (10,11) sont verrouillées au capot (8) par un système de clipsage.

6. Dispositif selon l'une des revendications précédentes, **caractérisé en ce que** le circuit imprimé (9) est positionné dans le capot (8) par un système de rails et de glissières complémentaires.

7. Dispositif selon la revendication précédente, **caractérisé en ce que** le circuit imprimé (9) est verrouillé mécaniquement dans le capot (8) à l'aide d'un système d'ergots et de cavités complémentaires, du type fixation par clipsage.

8. Dispositif selon l'une des revendications précédentes, **caractérisé en ce que** le contact électrique entre les languettes d'alimentation (10,11) et le circuit imprimé est réalisé par contact direct sur des zones du circuit imprimé, notamment par effet ressort des languettes, par exemple à l'aide d'une zone repliée de celles ci contre la surface du circuit.

9. Dispositif selon l'une des revendications précédentes, **caractérisé en ce que** le capot (8) est monté et verrouillé mécaniquement sur la bague éclairante (3), à l'aide d'un système d'ergot(s) et de cavité(s) complémentaires du type fixation par clipsage.

10. Dispositif selon l'une des revendications précédentes, **caractérisé en ce que** les languettes d'alimentation (10,11) et/ou le circuit (9) sont intégrés dans le capot (8) par des feuillures pratiquées dans ledit capot.

11. Dispositif l'une des revendications précédentes, **caractérisé en ce qu'**une des languettes d'alimentation (10) au moins est munie d'une zone réfléchissante (10^{e}).

12. Dispositif selon la revendication 11, **caractérisé en ce que** la zone réfléchissante (10^{e}) est en regard d'une ouverture pratiquée dans le circuit imprimé (9), notamment afin de rediriger au moins une partie du flux lumineux émis par la diode dans une direction déterminée.

13. Dispositif selon la revendication 11 ou 12, **caractérisé en ce que** la zone réfléchissante (10^{e}) de la languette d'alimentation (10) est en regard de la diode et permet notamment d'éclairer le cendrier du véhicule.

14. Allume-cigare, notamment destiné à équiper des véhicules, **caractérisé en ce qu'**il comprend un dispositif selon l'une au moins des revendications précédentes.

15. Véhicule automobile **caractérisé en ce qu'il** est muni de l'allume-cigare selon la revendication précédente.

## Claims

1. Lighting device for a cigarette lighter, comprising:
a lighting ring (3) on which there is fitted a lighting module (4'), **characterised in that** the said lighting module (4') comprises:
- at least one printed circuit (9) which is provided with at least one electroluminescent diode, and optionally with at least one resistor;
- a cover (8) which is designed to accommodate at least partly the said circuit (9) and its printed circuit; and
- at least two electrical supply tongues (10, 11) of the said printed circuit, which are secured mechanically to the said cover (8).

2. Device according to claim 1, **characterised in that** the or at least one of the electroluminescent diodes is welded directly onto the printed circuit.

3. Device according to one of the preceding claims, **characterised in that** the printed circuit is of the non-penetrating type, known as CMS.

4. Device according to one of the preceding claims, **characterised in that** the supply tongues (10, 11) are positioned in the cover (8) by means of a system of complementary rails and slides.

5. Device according to one of the preceding claims, **characterised in that** the supply tongues (10, 11) are locked onto the cover (8) by means of a clipping system.

6. Device according to one of the preceding claims, **characterised in that** the printed circuit (9) is positioned in the cover (8) by means of a system of complementary rails and slides.

7. Device according to the preceding claim, **characterised in that** the printed circuit (9) is locked mechanically in the cover (8) by means of a system of complementary lugs and cavities, of the type which are secured by clipping.

8. Device according to one of the preceding claims, **characterised in that** the electrical contact between the supply tongues (10, 11) and the printed circuit is provided by direct contact on areas of the printed circuit, in particular by a spring effect of the tongues, for example by means of an area of the latter which is folded back against the surface of the circuit.

9. Device according to one of the preceding claims, **characterised in that** the cover (8) is fitted and locked mechanically on the lighting ring (3) by means of a system of complementary lug(s) and cavity/cavities, of the type which are secured by clipping.

10. Device according to one of the preceding claims, **characterised in that** the supply tongues (10, 11) and/or the circuit (9) are integrated in the cover (8) by means of rebates provided in the said cover.

11. Device according to one of the preceding claims, **characterised in that** at least one of the supply tongues (10) is provided with a reflective area (10^{e}).

12. Device according to claim 11, **characterised in that** the reflective area (10^{e}) is opposite an opening provided in the printed circuit (9), in particular in order to redirect at least part of the flow of light emitted by the diode in a predetermined direction.

13. Device according to claim 11 or 12, **characterised in that** the reflective area (10^{e}) of the supply tongue (10) is opposite the diode, and makes it possible in particular to light the ashtray of the vehicle.

14. Cigarette lighter, which is designed in particular to equip vehicles, **characterised in that** it comprises a device according to at least one of the preceding claims.

15. Motor vehicle, **characterised in that** it is provided with the cigarette lighter according to the preceding claim.

## Patentansprüche

1. Beleuchtungsvorrichtung für einen Zigarettenanzünder, mit:
einem Leuchtring (3), auf dem ein Leuchtmodul (4') angebracht ist,
**dadurch gekennzeichnet, dass** das Leuchtmodul (4') umfasst:
- wenigstens eine gedruckte Schaltung (9), die mit wenigstens einer Leuchtdiode und gegebenenfalls wenigstens einem Widerstand versehen ist,
- eine Abdeckung (8), die dazu bestimmt ist, die Schaltung (9) und ihre gedruckten Leiter wenigstens zum Teil aufzunehmen,
- wenigstens zwei Zungen (10, 11) zur Stromversorgung der gedruckten Schaltung, die mechanisch an der Abdeckung (8) befestigt sind.

2. Vorrichtung nach Anspruch 1,
**dadurch gekennzeichnet, dass** die oder wenigstens eine der Leuchtdioden unmittelbar auf die gedruckte Schaltung gelötet ist.

3. Vorrichtung nach einem der vorhergehenden Ansprüche,
**dadurch gekennzeichnet, dass** die gedruckte Schaltung vom nicht durchgesteckten Typ ist, bezeichnet als SMD.

4. Vorrichtung nach einem der vorhergehenden Ansprüche,
**dadurch gekennzeichnet, dass** die Stromversorgungszungen (10, 11) in der Abdeckung (8) durch ein System aus Schienen und dazu komplementären Führungen positioniert sind.

5. Vorrichtung nach einem der vorhergehenden Ansprüche,
**dadurch gekennzeichnet, dass** die Stromversorgungszungen (10, 11) an der Abdeckung (8) durch ein Clip-System verriegeln.

6. Vorrichtung nach einem der vorhergehenden Ansprüche,
**dadurch gekennzeichnet, dass** die gedruckte Schaltung (9) in der Abdeckung (8) durch ein System aus Schienen und dazu komplementären Führungen positioniert ist.

7. Vorrichtung nach dem vorhergehenden Anspruch,
**dadurch gekennzeichnet, dass** die gedruckte Schaltung (9) mit Hilfe eines Systems aus Nasen und dazu komplementären Vertiefungen in der Abdeckung (8) mechanisch einrastet.

8. Vorrichtung nach einem der vorhergehenden Ansprüche,
**dadurch gekennzeichnet, dass** der elektrische Kontakt zwischen den Stromversorgungszungen (10, 11) und der gedruckten Schaltung durch direkte Berührung an Bereichen der gedruckten Schaltung insbesondere durch Federwirkung der Zungen erfolgt, zum Beispiel mit Hilfe eines gegen die Oberfläche der Schaltung umgebogenen Bereichs derselben.

9. Vorrichtung nach einem der vorhergehenden Ansprüche,
**dadurch gekennzeichnet, dass** die Abdeckung (8) auf dem Leuchtring (3) mit Hilfe eines Systems aus Nase(n) und dazu komplementärer(en) Vertiefung(en) vom Typ Clipbefestigung angebracht wird und mechanisch einrastet.

10. Vorrichtung nach einem der vorhergehenden Ansprüche,
**dadurch gekennzeichnet, dass** die Stromversorgungszungen (10, 11) und/oder die Schaltung (9) in der Abdeckung (8) durch darin ausgebildete Falze integriert sind.

11. Vorrichtung nach einem der vorhergehenden Ansprüche,
**dadurch gekennzeichnet, dass** wenigstens eine der Stromversorgungszungen (10) mit einem reflektierenden Bereich (10^{e}) versehen ist.

12. Vorrichtung nach Anspruch 11,
**dadurch gekennzeichnet, dass** der reflektierende Bereich (10^{e}) gegenüber einer in der gedruckten Schaltung (9) ausgebildeten Öffnung liegt, insbesondere um wenigstens einen Teil des von der Diode emittierten Lichtstroms in eine bestimmte Richtung weiterzuleiten.

13. Vorrichtung nach Anspruch 11 oder 12,
**dadurch gekennzeichnet, dass** der reflektierende Bereich (10^{e}) der Stromversorgungszunge (10) gegenüber der Diode liegt und insbesondere den Aschenbecher des Fahrzeugs zu beleuchten erlaubt.

14. Zigarettenanzünder, der insbesondere zur Ausstattung von Kraftfahrzeugen bestimmt ist,
**dadurch gekennzeichnet, dass** er eine Vorrichtung nach einem der vorhergehenden Ansprüche umfasst.

15. Kraftfahrzeug,
**dadurch gekennzeichnet, dass** es mit einem Zigarettenanzünder nach dem vorhergehenden Anspruch ausgestattet ist.
